# EUROPEAN PATENT SPECIFICATION

(11) **EP 3 184 961 B1**
(45) Date of publication and mention of the grant of the patent: **06.01.2021**
(21) Application number: 17156131.9
(22) Date of filing: 29.08.2014
(51) Int. Cl.: G01C 19/5712, G01C 19/5733, G01C 19/574

(54) **MICROMACHINED GYROSCOPE INCLUDING A GUIDED MASS SYSTEM**
MIKROGEFERTIGTES GYROSKOP MIT EINEM GEFÜHRTEN MASSESYSTEM
GYROSCOPE MICRO-USINÉ COMPRENANT UN SYSTÈME DE MASSE GUIDÉE

(30) Priority: 30.09.2013 US 201314041810
(43) Date of publication of application: 28.06.2017
(62) Divisional of application: 14182956.4
(73) Proprietor: Invensense, Inc., San Jose, California 95110 (US)
(72) Inventor: ANAC, Ozan, San Bruno, CA California 94066 (US); SEEGER, Joseph, Menlo Park, CA California 94025 (US)
(74) Representative: Shipp, Nicholas

(56) References cited:
- WO-A2-2009/130554
- US-A1- 2009 260 437
- US-A1- 2010 199 764
- US-A1- 2013 068 018
- US-A1- 2013 086 985
- US-A1- 2013 239 686

## Description

### CROSS-REFERENCE TO RELATED APPLICATION

This application is a continuation-in-part of U.S. Patent Application No. 13/235,296, filed 9/16/2011, entitled "MICROMACHINED GYROSCOPE INCLUDING A GUIDED MASS SYSTEM".

### FIELD OF THE INVENTION

The present invention relates generally to angular velocity sensors and more particularly relates to angular velocity sensors that include guided mass systems.

### BACKGROUND

Sensing of angular velocity is frequently performed using vibratory rate gyroscopes. Vibratory rate gyroscopes broadly function by driving the sensor into a first motion and measuring a second motion of the sensor that is responsive to both the first motion and the angular velocity to be sensed.

Frequently, a mass, usually referred to as a proof mass, within the sensor is driven into oscillation by an actuator. Rotation of the sensor imparts a Coriolis force to the oscillating mass that is proportional to the angular velocity (or rotation rate), and depends on the orientation of the angular velocity vector with respect to the velocity vector of the proof mass. The Coriolis force, the angular velocity vector, and the proof-mass velocity vector are mutually orthogonal. For example, a proof-mass moving in an X-direction within a sensor rotating about a Y-axis, experiences a Z directed Coriolis force. Similarly, a proof-mass moving in an X-direction within a sensor rotating about a Z-axis, experiences a Y directed Coriolis force. Finally, a proof-mass moving in an X-direction within a sensor rotating about the X-axis experiences no Coriolis force. Coriolis forces imparted to the proof-mass are usually sensed indirectly by measuring motions within the sensor that are responsive to the Coriolis forces.

Conventional gyroscopes that sense angular velocity about an in-plane axis (i.e. X-axis or Y-axis) can be driven out-of-plane, and the Coriolis response is sensed in-plane or vice versa. Out-of-plane drive tends to be less efficient than in-plane drive, requires additional fabrication steps, and is limited by nonlinearities. For example, driving the proof-mass out-of-plane might require a large vertical gap or a cavity underneath the proof-mass to provide sufficient room for the proof-mass to oscillate. Forming a cavity under the proof-mass requires additional fabrication steps, thus increases cost. Typically electrostatic actuators of the parallel-plate type are used to drive the proof-mass out-of-plane. The actuators are formed between the proof-mass and the substrate. The electrostatic force depends on the gap between the proof-mass and the substrate. Because the proof-mass oscillates out-of-plane, the electrostatic force is nonlinear which tends to limit the device performance. Additionally, the electrostatic force is reduced because of the requirement to have large vertical gaps or a cavity under the proof-mass. Achieving large amplitude oscillation requires large force and that might require high-voltage actuation. Adding high-voltage actuation increases the fabrication cost and complexity of the integrated circuits.

Furthermore a conventional multi-axis gyroscope might use multiple structures that oscillate at independent frequencies to sense angular rates. Each structure requires a separate drive circuit to oscillate the respective proof-masses. Having more than one drive circuit increases cost and power consumption.

Accordingly, what is desired is to provide a system and method that overcomes the above issues. The present invention addresses such a need.

US 2013/0239686 A1 describes A MEMS detection structure with: a substrate having a top surface, on which a first fixed-electrode arrangement is set; a sensing mass, extending in a plane and suspended above the substrate and above the first fixed-electrode arrangement at a separation distance; and connection elastic elements that support the sensing mass so that it is free to rotate out of the plane about an axis of rotation, modifying the separation distance, as a function of a quantity to be detected along an axis orthogonal to the plane. The MEMS detection structure also includes: a coupling mass, suspended above the substrate and connected to the sensing mass via the connection elastic elements; and an anchoring arrangement, which anchors the coupling mass to the substrate with a first point of constraint, set at a distance from the axis of rotation and in a position corresponding to the first fixed-electrode arrangement.

### SUMMARY

A gyroscope comprises a substrate and a guided mass system. The guided mass system comprises a first proof mass, a second proof-mass, and a guiding arm. The first proof-mass, the second proof-mass and the guiding arm are disposed in a plane parallel to the substrate. The first proof mass is coupled to the guiding arm through a first spring; the second proof-mass is coupled to the first proof-mass through a second spring. The guiding arm is coupled to the substrate through a third spring. The second proof-mass is coupled to the substrate by an anchor and a spring system. The gyroscope also comprises an actuator for vibrating the first proof-mass in a first direction, which causes the second proof-mass to rotate in the plane. Finally, the gyroscope comprises at least one transducer for sensing motion of a portion of the guided mass system in the out of the plane direction in response to angular velocity about a first input axis that is in the plane.

### BRIEF DESCRIPTION OF THE DRAWINGS

Figure 1A illustrates a comparative example of a single-axis gyroscope comprising a guided mass system surrounded by a stress relief frame.
Figure 1B shows a cross-section of a proof mass of the single-axis gyroscope of Figure 1A along the X-axis.
Figure 1C illustrates the shape of the substrate and the proof-mass when external loads applied to the single-axis gyroscope of Figure 1A.
Figure 2A illustrates an embodiment of a first single-axis gyroscope configuration in accordance with the present invention.
Figure 2B illustrates the gyroscope of Figure 2A when the substrate is warped.
Figure 3 illustrates a modification of the single-axis gyroscope, shown in Figure 2A, to implement a dual-axis gyroscope. In this embodiment proof mass is coupled to the substrate via spring system.
Figure 4A illustrates a comparative example of a single-axis pitch gyroscope comprising a guided mass system in accordance with a comparative example.
Figure 4B shows a different comparative example of the single axis gyroscope given in Figure 4A.
Figure 5 illustrates a modification of the single-axis gyroscope shown in Figure 4A to implement a dual-axis gyroscope.
Figure 6 illustrates an embodiment of a dual-axis gyroscope comprising a balanced guided mass system in accordance with the present invention.
Figure 7 illustrates an embodiment of a tri-axis gyroscope comprising a multiple guided mass system in accordance with the present invention.

### DETAILED DESCRIPTION

The following description is presented to enable one of ordinary skill in the art to make and use the invention and is provided in the context of a patent application and its requirements. Various modifications to the preferred embodiments and the generic principles and features described herein will be readily apparent to those skilled in the art. Thus, the present invention is not intended to be limited to the embodiments shown, but is to be accorded the scope of the appended claims.

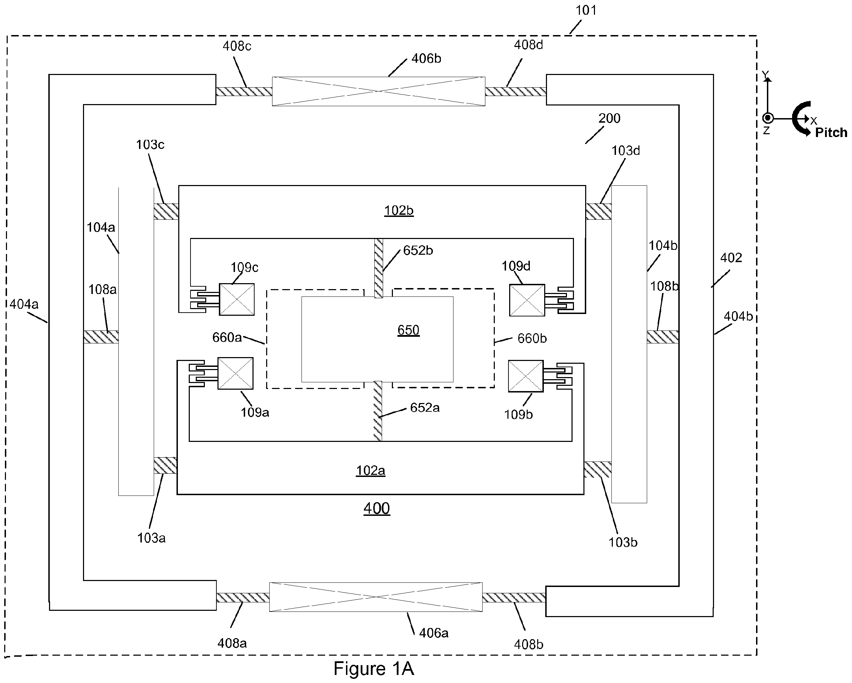

Figure 1A illustrates a single-axis gyroscope comprising a guided mass system 400 surrounded by a stress relief frame 402 in accordance with comparative example. Gyroscope 400 is described in U.S. Patent Application No. 13/235,296 (IVS-147/5007P), filed 9/16/2011, and published as US2013/068018, entitled "MICROMACHINED GYROSCOPE INCLUDING A GUIDED MASS SYSTEM". The guided mass system 400 comprises a symmetric guided mass system 200 coupled to a pitch proof-mass 650. The stress relief frame 402 is connected to the guiding arms 104a and 104b via springs 108a and 108b and surrounds the symmetric guided mass system 200. The stress relief frame 402 includes two stress relief frame members 404a and 404b which are coupled to the anchors 406a and 406b respectively via stress relief springs 408a-d. Anchors 406a and 406b are attached to substrate 101. The stress relief members 404a and 404b can also be flexible.

In a comparative example, symmetric guided mass system 200 includes guiding arms 104a and 104b. Two guiding arms 104a and 104b are flexibly coupled to proof-mass 102a and proof-mass 102b via springs 103a-b and 103c-d, respectively. The guiding arms 104a and 104b, proof masses 102a and 102b, and coupling springs 103a-d form a planar four-bar linkage.

In a comparative example, symmetric guided mass system 200 can be driven at a frequency by a drive circuit coupled to the actuators 109a-d. In the described comparative examples, the drive circuit can be a single drive circuit or multiple drive circuits. When the guided mass system 200 is driven, each spring 103a, 103b, 103c, 103d, 108a, and 108b bend in-plane and act like a pivot point for the rotation of the four-bar linkage so that each guiding arm 104a and 104b can rotate in-plane about different axes in the Z-direction and proof masses 102a and 102b translate anti-phase along the X-direction. In the present specification, anti-phase means in opposing directions, and in-phase means in the same direction.

Pitch proof-mass 650 is flexibly connected to the two proof-masses 102a and 102b via springs 652a and 652b. Springs 652a and 652b are torsionally compliant such that pitch proof-mass 650 can rotate out-of-plane about a pitch sense axis in the Y-direction. Springs 652a and 652b are compliant in-plane such that when proof-masses 102a and 102b are driven anti-phase in the X-direction; the pitch proof-mass 650 rotates in-plane about an axis in the Z-direction. A combination of the anti-phase motion of proof-masses 102a-b and the in-plane rotation of the pitch proof-mass 650 about Z axis is referred to as drive motion. Although pitch proof mass 650 is shown as a single mass in Figure 1A, in other comparative examples, proof mass 650 may include many masses and plates that are connected to each other via flexible elements. In other words, proof mass 650 can comprise a combination of mass-spring system that is connected to proof masses 102a and 102b via springs 652a and 652b.

Anchors 406a and 406b might experience motion such as translation, expansion, or shearing as a result of thermal stress, packaging stress, or other externally applied stresses. Anchor motion can cause stress, such as tension, on the symmetric guided mass system, resulting in errors such as changing stiffness and resonant frequencies; anchor motion can also cause unwanted motion of the symmetric guided mass system resulting in errors. The stress-relief frame 402 reduces stresses and unwanted motion of the symmetric guided mass system 200. Moreover, the stress relief frame 402 does not move in the drive motion. As a result, the stresses that are applied to frame are not transferred to the springs that affect drive motion.

Angular velocity about the pitch-input axis will cause Coriolis forces to act on the pitch proof-mass 650 resulting in a torque that rotates the pitch proof-mass 650 about Y-axis. The amplitude of the rotation of the pitch proof-mass 650 is proportional to the angular velocity about the pitch-input axis. In a comparative example, electrodes 660a and 660b are disposed on the substrate on the opposite sides along the X-direction under pitch proof-mass 650. In a comparative example, electrodes 660a-b are capacitive transducers for detecting the rotation of the pitch proof-mass about the Y-axis. The rotation of the pitch proof mass 650 provides a measure of the angular velocity about the pitch-input axis. In other comparative examples, the transducer can be piezoelectric, optical, or other types and its use would be within the scope of the present invention.

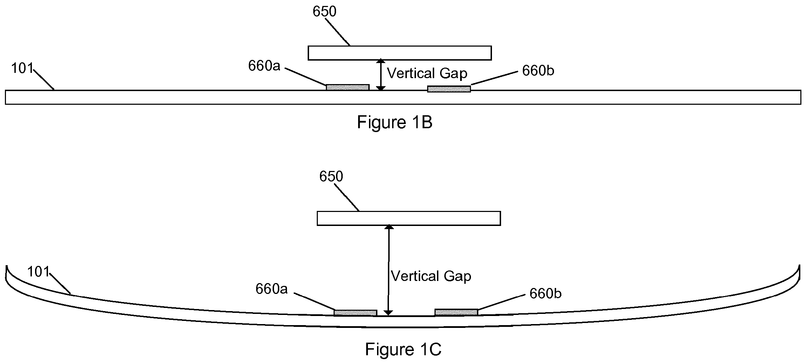

The transducer sensitivity is the amount of capacitance change due to the change in the angular velocity input. The transducer sensitivity to the angular velocity of pitch proof-mass 650 depends on a nominal capacitance between pitch proof-mass 650 and electrodes 660a-b. In a comparative example, the nominal capacitance is proportional to the overlap area between pitch proof mass 650 and electrodes 660a and 660b and inversely proportional to the gap between proof mass 650 and electrodes 660a-b. The gap between proof mass 650 and electrodes 660a-b is called the vertical gap. The vertical gap is illustrated in Figure 1B which shows a cross-section of proof mass 650 along X-axis. The vertical gap between pitch proof mass 650 and electrodes 660a-b is one of the main factors that affects the transducer sensitivity of the gyroscope.

Although the gyroscope of Figure 1A work effectively in a variety of environments, variation of the vertical gap during the regular operation of the gyroscope results in transducer sensitivity variations, which can lead to erroneous results in the final output. Variation of the vertical gap may be caused by the external effects like temperature changes or external loads acting on the gyroscope. Temperature changes can lead to warping of the substrate due to coefficient of thermal expansion (CTE) mismatch of the substrate and materials used for packaging and assembly. Similarly, external loads applied to the gyroscope can lead to warping of substrate 101 (See Figure 1C). If the gyroscope doesn't warp as much as the substrate, the vertical gap between pitch proof mass 650 and electrodes 660a-b changes. Consequently, the vertical gap variation leads to the variation of the transducer sensitivity and results in erroneous measurements of the gyroscope by the environmental effects. The severity of erroneous results due to the environmental effects depends on the amount of the variation of the vertical gap.

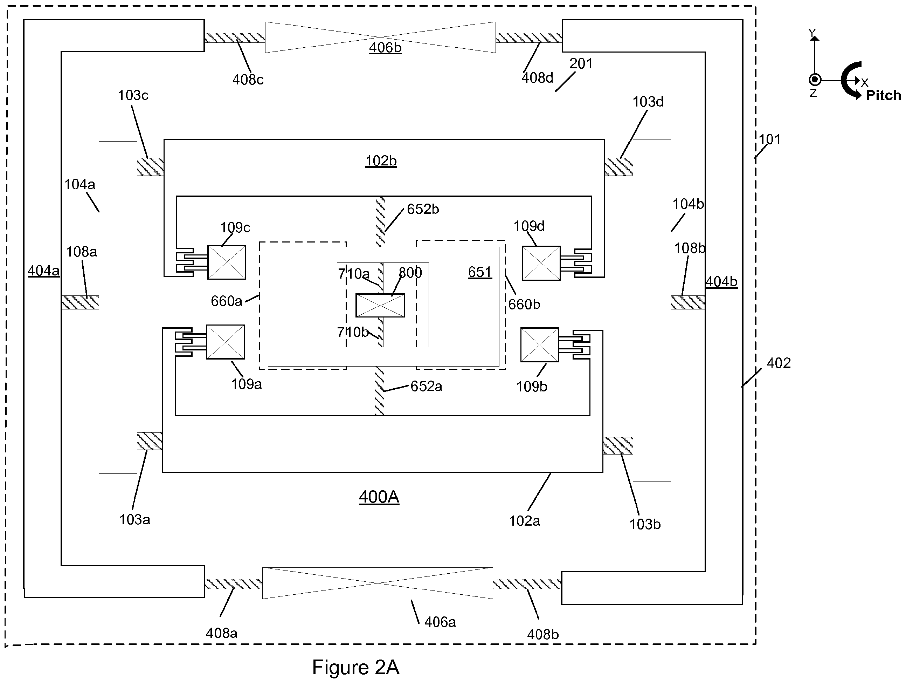

An embodiment of a single-axis gyroscope configuration is shown in Figure 2A. Figure 2A includes all the features of Figure 1A except for pitch proof mass 650. Pitch proof -mass 651 is connected to the substrate 101 via anchor 800 through springs 710a-b. Springs 710a-b are compliant to the in-plane rotations about Z-axis and out-of plane torsional rotation about the Y-axis of pitch proof-mass 651. On the other hand, springs 710a-b are very stiff to the out-of plane translations (Z direction translation). As a result, any out-of plane motion or the warping of substrate 101 can be transferred to pitch proof-mass 651 via anchor 800 through springs 710a-b.

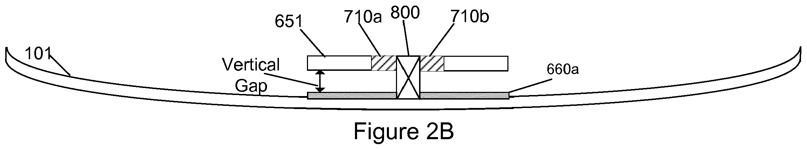

An embodiment of the cross-section along the Y-axis of the warped substrate 101 is shown in Figure 2B. As it can be seen in Figure 2B, pitch proof mass 651 follows the motion of the substrate 101 due to the connection through anchor 800 and springs 710a-b. Hence, the pitch proof-mass 651 can follow substantially the same amount of vertical deflection as the substrate under the external loads or temperature variations. Consequently, the vertical gap between the electrodes 660a-b and the pitch proof-mass 651 remains same and the variation of the angular velocity sensitivity of the single-axis gyroscope due to external effects is eliminated.

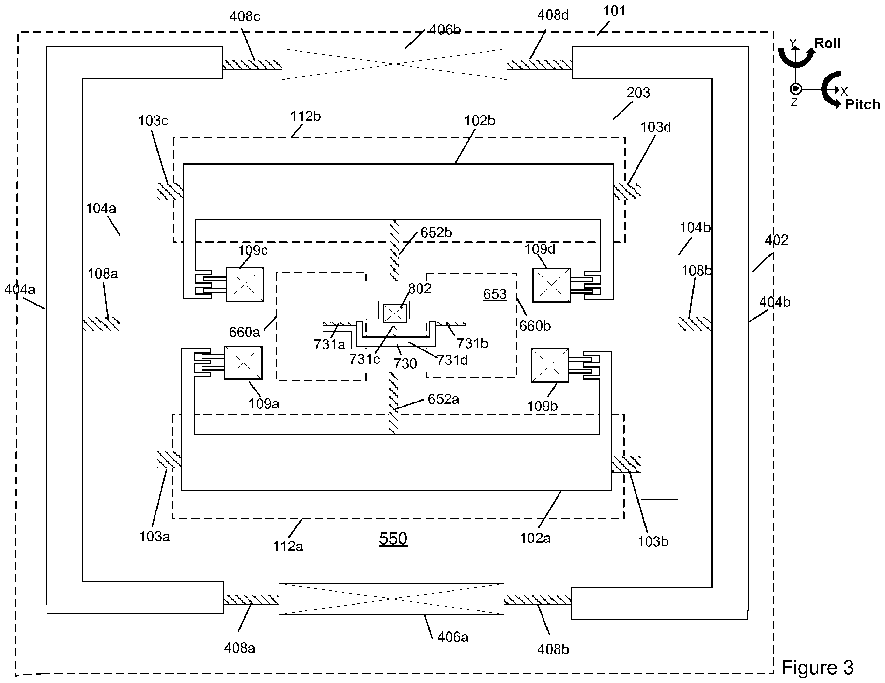

Figure 3 illustrates a modification of the single-axis gyroscope 400A, shown in Figure 2A, to implement a dual-axis gyroscope 550. In this embodiment pitch proof- mass 653 is coupled to the substrate 101 via spring system 730. Spring system 730 comprises three flexible elements 731a-c and one rigid element731d. Rigid element 731d is connected to the anchor 802 via the flexible element 731c, and rigid element 731d is connected to the pitch proof-mass 653via the springs 731a-b. Rigid element 731d is used to place the springs731a-b away from the center of rotation of the pitch-proof mass 653. As a result, springs 731a-b are stiff enough so that their bending is minimized in the drive motion and they move with pitch proof-mass 653. Moreover, springs 731a-b are torsionally compliant around the X-axis and very stiff in all other directions which allows pitch proof-mass 653,roll proof-masses 102a-b and guiding arms 104a-b to rotate about X-axis.

Spring 731c is compliant to bend in-plane acting like a pivot point for the rotation of proof mass 653 about Z -axis. Spring 731c is also torsionally compliant around the Y-axis. Similar to the implementation given in Figure 2A, pitch proof-mass 653 follows the motion of substrate 101 and the vertical gap remains same even under the external effects like temperature variations and externally applied forces, since it is connected to the substrate 101 via anchor 802 through spring system 730 which is stiff in the out of plane direction.

Pitch proof mass 653 can be torsionally rotated out-of plane around both X and Y axis due to the compliance of the spring system 730. As a result, the dual-axis gyroscope can respond not only to the angular velocities about the pitch-input axis but also to the angular velocities around the roll-input axis.

The symmetric guided mass system 203 can be driven at a frequency by a drive circuit coupled to the actuators 109a-d. When the guided mass system 203 is driven, each of the guiding arms 104a and 104b rotates in-plane about different axes in the Z-direction, the roll proof-masses 102a and 102b translate anti-phase along the X-direction and proof-mass 653 rotates about Z-axis. Angular velocity about the roll-input axis will cause Coriolis forces to act on the roll proof-masses 102a and 102b anti-phase in the Z-direction.

The Coriolis forces cause the guided mass system 203 to rotate out-of-plane about the X-axis. When the guided mass system 203 rotates out-of-plane, the guiding arms 104a and 104b rotate about the X-axis, and the roll proof-masses 102a and 102b are constrained to move anti-phase out-of-plane by the guiding arms 104a and 104b. Electrodes 112a and 112b which are under the roll proof masses 102a and 102b respectively are used to detect the rotation of the guided mass system 200 about the first roll-sense axis. This rotation provides a measure of the angular velocity about the roll-input axis.

The detection mechanism of the angular velocity around the pitch sense axis is same as the given configuration in Figure 2A. Angular velocity about the pitch-input axis will cause Coriolis forces to act on the pitch proof-mass 653 resulting in a torque that rotates the pitch proof-mass 653 about Y-axis because spring 731c is torsionally compliant around the Y-axis. The amplitude of the rotation of the pitch proof-mass 653 is proportional to the angular velocity about the pitch-input axis. Electrodes 660a and 660b are disposed on the substrate on the opposite sides along the X-direction under the pitch proof-mass 653 and detect the rotation of the pitch proof-mass about the Y-axis.

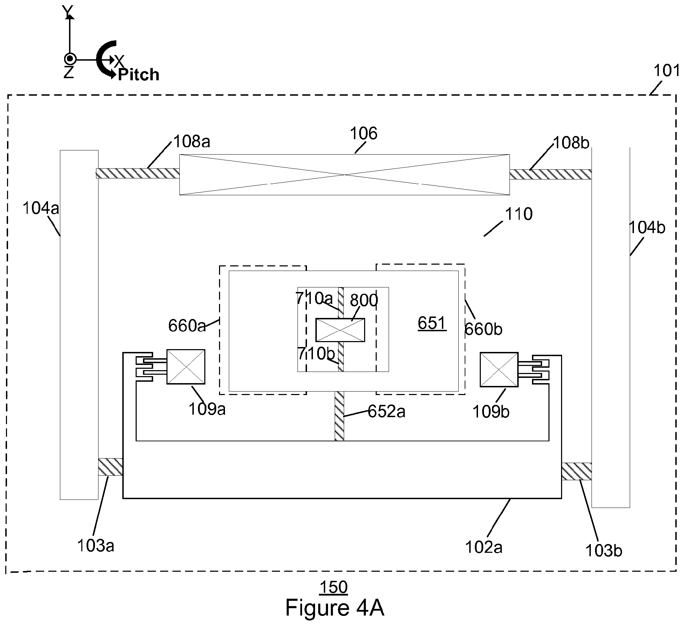

Figure 4A illustrates a comparative example of a single-axis pitch gyroscope comprising guided mass system 150 in accordance with the present invention. The guided mass system 150 includes guiding arms 104a and 104b that are flexibly coupled to the substrate 101 via at least one anchoring point 106 with the springs 108a and 108b. The two guiding arms 104a and 104b are flexibly coupled to one proof-mass 102a via springs 103a and 103b.

The proof-mass 102a, guiding arms 104a and 104b, anchoring point 106, and springs 103a, 103b, 108a, and 108b form a planar four-bar linkage. Each spring 103a, 103b, 108a, and 108b bend in-plane and act like pivot point for the rotation of the four-bar linkage so that each guiding arm 104a and 104b can rotate in-plane about different axes in the Z-direction while proof-mass102a translates in an X-direction.

Guided mass system 150 also comprises a pitch proof-mass 651. The pitch proof-mass 651 is flexibly coupled to the proof-mass 102a via spring 652a and it is connected to the substrate 101 via an anchor 800 through springs 710a-b. Spring 652a and springs 710a-b are compliant in-plane such that when the proof mass 102a is driven in the X-direction via the electrostatic force applied by the comb fingers 109a-b; the pitch proof-mass 651 rotates in-plane about an axis in the Z-direction in the drive mode.

Springs 710a-b are also compliant for the out-of plane rotation of the pitch proof-mass about Y-axis. On the other hand, springs 710a-b are very stiff to the out-of plane translations (Z direction translation). As a result, any out-of plane motion or the warping of the substrate 101 can be transferred to pitch proof-mass 651 via anchor 800 through springs 710a-b. Hence, the pitch proof-mass 651 can follow the same amount of vertical deflection as the substrate under the external loads or temperature variations which reduces variation of the vertical gap.

Angular velocity about the pitch-input axis will cause Coriolis forces to act on the pitch proof-mass 651 resulting in a torque that rotates the pitch proof-mass 651 about the pitch-sense axis which is orthogonal to the pitch input axis. The amplitude of the rotation of the pitch proof-mass 651 is proportional to the angular velocity about the pitch-input axis. Electrodes 660a and 660b are disposed on the substrate on the opposite sides along the X-direction under the pitch proof-mass 651 and detect the rotation of the pitch proof-mass about the Y-axis. Rotation about the Y-axis provides a measure of the angular velocity about the pitch-input axis.

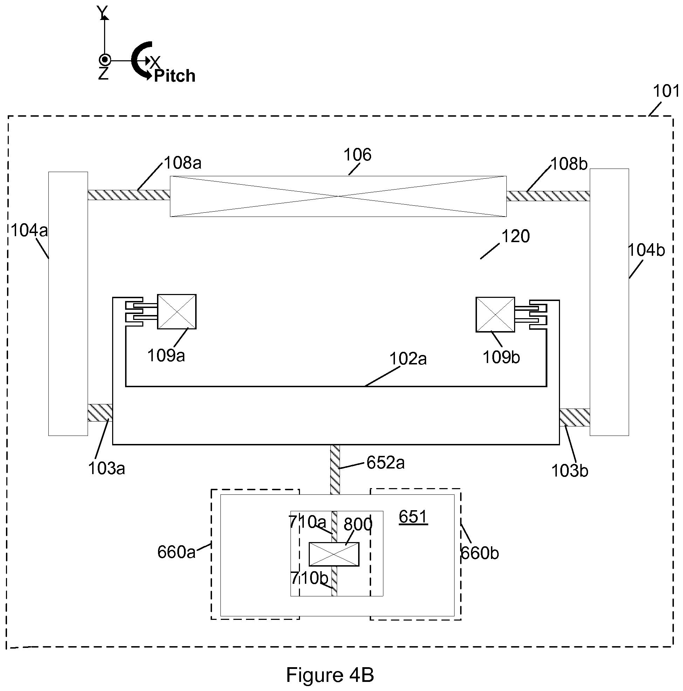

Figure 4B shows a different comparative example of the single axis gyroscope given in Figure 4A. In Figure 4B, the proof mass 651 is placed outside of the four bar linkage defined by the proof-mass 102a, guiding arms 104a and 104b, anchoring point 106, and springs 103a, 103b, 108a, and 108b. The comparative example given in Figure 4B can be used if the area surrounded by the four bar linkage is limited or for any other design purposes, such as an additional proof-mass for sensing angular velocity about the yaw-axis or additional drive electrodes.

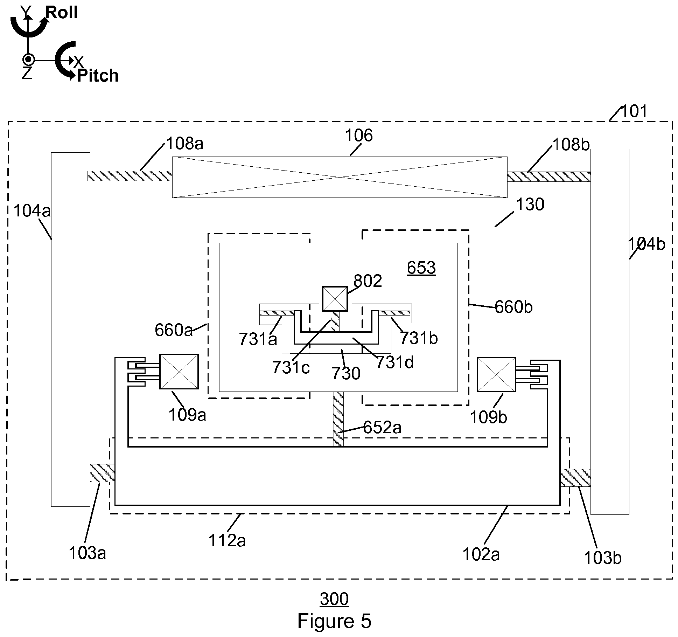

Figure 5 illustrates a comparative example of a modification of the single-axis gyroscope shown in Figure 4A to implement a dual-axis gyroscope. In this comparative example, proof mass 653 is coupled to substrate 101 via spring system 730. Spring system 730 comprises three flexible elements 731a-c and one rigid element 731d. Rigid element 731d is connected to the anchor 802 via flexible element 731c, and rigid element 731d is connected to the pitch proof-mass 653 via the springs 731a-b.

Springs 731a-b are torsionally compliant around the X-axis and very stiff in all other directions which allows pitch proof-mass 653, roll proof-mass 102a and guiding arms 104a-b to rotate about X-axis. Spring 731c is compliant to bend in-plane acting like a pivot point for the rotation of proof mass 653 about Z -axis. Spring 731c is also torsionally compliant around the Y-axis.

Similar to the implementation given in Figure 2A, pitch proof-mass 653 follows the motion of the substrate and the vertical gap remains same even under the external effects like temperature variations and external loading, since it is connected to the substrate via the anchor 802 through the spring system 730 which is stiff in the out of plane direction.

The pitch proof mass 653 given in Figure 5 can be torsionally rotated out-of plane around both X and Y axes by the help of the spring system 730. As a result, the dual-axis gyroscope can respond not only to the angular velocities about the pitch-input axis but also to the angular velocities around the roll-input axis.

In a comparative example, guided mass system 300 can be driven at a frequency by a drive circuit coupled to actuators 109a-b. When guided mass system 300 is driven, each of guiding arms 104a and 104b rotates in-plane about different axes in the Z-direction, roll proof-mass102a translate along the X-direction, and proof-mass 653 rotates about Z-axis. Angular velocity about the roll-input axis will cause Coriolis forces to act on roll proof-mass 102a in the Z-direction. The Coriolis forces cause guided mass system 300 to rotate out-of-plane about the X-axis. When guided mass system 300 rotates out-of-plane, guiding arms 104a and 104b rotate about the X-axis, and roll proof-mass 102a is constrained to move out-of-plane by guiding arms 104a and 104b. Electrodes 112a under roll proof mass 102a is used to detect the rotation of guided mass system 300 about the first roll-sense axis. This rotation provides a measure of the angular velocity about the roll-input axis.

The detection mechanism of the angular velocity of guided mass system 300 around the pitch sense axis is same as the given configuration in Figure 4A. Angular velocity about the pitch-input axis will cause Coriolis forces to act on the pitch proof-mass 653 resulting in a torque that rotates the pitch proof-mass 653 about Y-axis because spring 731c is torsionally compliant around the Y-axis. The amplitude of the rotation of the pitch proof-mass 653 is proportional to the angular velocity about the pitch-input axis. Electrodes 660a and 660b are disposed on the substrate on the opposite sides along the X-direction under the pitch proof-mass 650 and detect the rotation of the pitch proof-mass about the Y-axis.

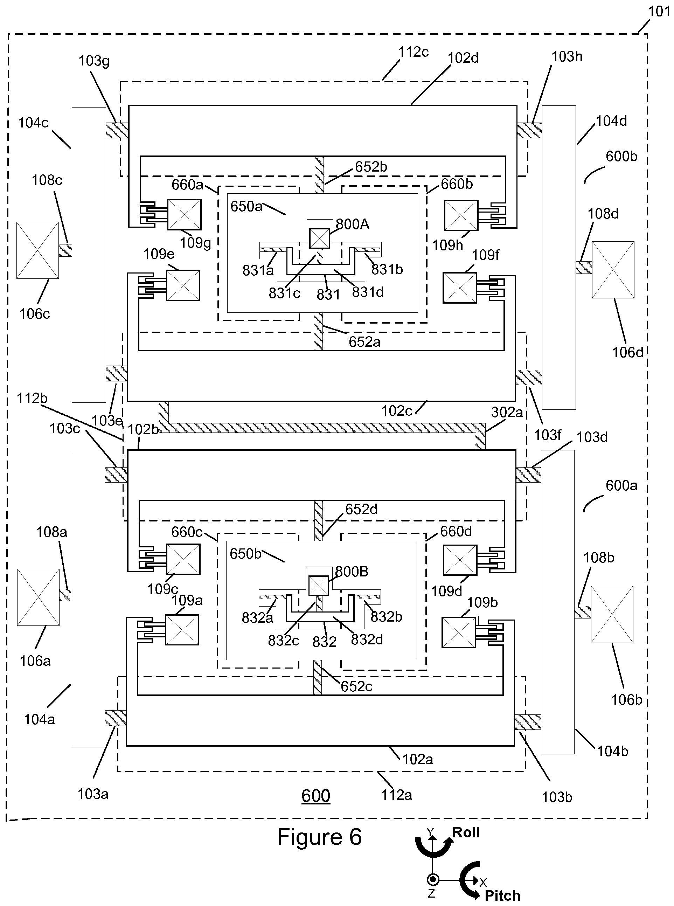

Figure 6 illustrates an embodiment of a dual-axis gyroscope comprising a balanced guided mass system 600 in accordance with the present invention. The guided mass system 600 comprises two guided mass systems 600a and 600b coupled together by coupling spring 302a. The guided mass systems 600a and 600b are connected to anchors 106a-d via springs 108a-d.

The symmetric guided mass system 600a rotates out-of-plane about a first roll-sense axis. The symmetric guided mass system 600b rotates out-of-plane about a second roll-sense axis in-plane and parallel to the first roll-sense axis. The coupling spring 302a is connected to roll proof-masses 102b and 102c. The coupling spring 302a is torsionally compliant about an axis in the X-direction so that the symmetric guided mass systems 600a and 600b can rotate anti-phase out-of-plane about the first and second roll-sense axes. The coupling spring 302a is stiff in the Z-direction which prevents the symmetric guided mass systems 600a and 600b from rotating in-phase out-of-plane.

In an embodiment, pitch proof-masses 650a and 650b are each flexibly connected to their respective four roll proof-masses 102a-102d via springs 652a-d. Springs 652a and 652b are torsionally compliant such that pitch proof-mass 650a can rotate out-of-plane about a first pitch sense axis in the Y-direction, and springs 652c and 652d are torsionally compliant such that pitch proof-mass 650b can rotate out-of-plane about a second pitch sense axis in the Y-direction.

In this embodiment proof masses 650a and 650b are also coupled to the substrate via spring systems 831 and 832, respectively. In an embodiment, spring systems 831 and 832 are same as the spring system 730. Similar to the implementation given in Figure 3, pitch proof-masses 650a and 650b follow the motion of the substrate and the vertical gap between the substrate and the proof masses remain same even under the external effects like temperature variations and externally applied forces.

The two symmetric guided mass systems 600a and 600b are arranged so that the roll proof-masses 102a-d all move in the X-direction. The coupling spring 302a is stiff in the X-direction such that roll proof-masses 102b and 102c move together in the X-direction. The roll proof-masses 102a and 102d move in opposite of roll proof-masses 102b and 102c.

Springs 652a-d are compliant in-plane such that when the roll proof-masses 102a-d are driven, the pitch proof-masses 650a and 650b rotate anti-phase in-plane about separate axes in the Z-direction. Electrostatic actuators 109a-h such as comb drives, are connected to the roll proof-masses 102a-d to drive the balanced guided mass system 600. The two guided mass systems 600a and 600b comprising roll proof-masses 102a-d and pitch proof-masses 650a and 650b are driven together at a frequency by a drive circuit coupled to the actuators 109a-h.

Angular velocity about the pitch-input axis in the X-direction will cause Coriolis forces to act on the pitch proof-masses 650a and 650b about the first and second pitch-sense axes respectively. The Coriolis forces cause the pitch proof masses 650a and 650b to rotate anti-phase out-of-plane about the first and the second pitch-sense axes. The amplitudes of the rotations of the pitch proof-masses 650a and 650b about the first and the second pitch-sense axes are proportional to the angular velocity about the pitch-input axis.

In an embodiment, transducers 660a-660d under the pitch proof masses 650a and 650b are used to detect the anti-phase rotations about the first and the second pitch-sense axes. Externally applied angular acceleration about the roll-input axis will generate inertial torques in-phase on the pitch proof masses 650a and 650b causing them to rotate in-phase about the first and the second pitch-sense axes. Transducers 660a and 660d can be coupled and transducers 660b and 660c can be coupled so that in-phase rotations of the pitch proof-masses 650a and 650b are not detected, but anti-phase rotations are detected.

Angular velocity about the roll-input axis will cause Coriolis forces to act on the roll proof-masses 102a-d in the Z-direction. The Coriolis forces cause the symmetric guided mass systems 600a and 600b to rotate anti-phase out-of-plane about the first and second roll-sense axes. Transducers 112a-c under the roll proof masses 102a-d are used to detect the rotations of the symmetric guided mass systems 600a and 600b. Externally applied angular acceleration about the pitch-input axis will generate in-phase inertial torques on the symmetric guided mass systems 600a and 600b.

However, the symmetric guided mass systems 600a and 600b do not rotate because coupling spring 302a prevents in-phase rotation about the first and second roll-sense axes. Transducers 112a and 112c can be coupled so that in-phase rotations of the symmetric guided mass systems 600a and 600b are not detected but anti-phase rotations are detected.

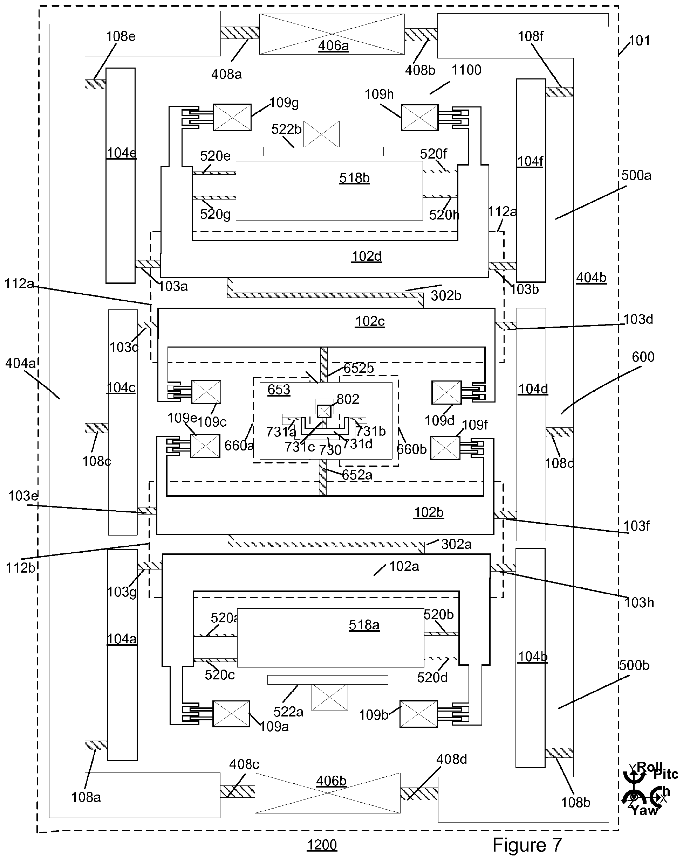

Figure 7 illustrates an embodiment of a tri-axis gyroscope comprising a multiple guided mass system 1200 in accordance with the present invention. The multiple guided mass system 1200 comprises the multiple guided mass system 1100 coupled to a stress relief frame 402.

The stress relief frame 402 is connected to the guiding arms 104a-f via springs 108a-f respectively and surrounds the multiple guided mass system 1100. The guided mass systems 500a, 500b and 600 are arranged so that when roll proof-masses 102a-d all move in the X-direction, the pitch proof-mass 653 rotates about an axis in the Z-direction, and the yaw proof-masses 518a and 518b move anti-phase in the X-direction. The guided mass systems 500a, 500b, and 600 are driven together at a frequency by a drive circuit coupled to the actuators 109a-h.

In an embodiment, angular velocity about the pitch-input axis causes Coriolis forces to act on the pitch proof-mass 653 resulting in a torque that rotates the pitch proof-mass 653 about the pitch-sense axis. The amplitude of the rotation of the pitch proof-mass 653 is proportional to the angular velocity about the pitch-input axis. Electrodes 660a and 660b are disposed on opposite sides along the X-direction under the pitch proof-mass 653 and detect the rotation of the pitch proof-mass about the pitch-sense axis. The rotation provides a measure of the angular velocity about the pitch-input axis. Similar to the pitch proof mass configuration given in Figure 5, proof mass 653 connected to the substrate via anchor 802 with the use of spring system 730.

Angular velocity about the roll-input axis causes Coriolis forces to act on the roll proof-masses 102a and 102b in a Z-direction and on roll proof-masses 102c and 102d in the opposite Z-direction. The Coriolis forces cause the guided mass systems 500a, 600, and 500b to rotate out-of-plane about the first, second, and third roll-sense axis respectively. Electrode 112a under the roll proof masses 102a and 102b and electrode 112b under the roll proof masses 102c and 102d are used to detect the rotation of the guided mass system 1100. This rotation provides a measure of the angular velocity about the roll-input axis.

Angular velocity about the yaw-input axis causes Coriolis forces to act on the yaw proof-masses 518a and 518b resulting in motion of the yaw proof-masses 518a and 518b anti-phase along the Y-direction. The amplitude of the motion of the yaw proof-masses along the Y-direction is proportional to the angular velocity. Electrodes 522a and 522b are used to sense the motion of the respective yaw proof masses 518a and 518b along the Y-direction.

Although the present invention has been described in accordance with the embodiments shown, one of ordinary skill in the art will readily recognize that there could be variations to the embodiments and those variations would be within the scope of the present invention. Accordingly, many modifications may be made by one of ordinary skill in the art without departing from the scope of the present invention, as defined by the appended claims.

## Claims

1. A gyroscope comprising:
a substrate (101);
a guided mass system (200), the guided mass system comprising at least one first proof mass (102a), at least one second proof-mass (102b), at least one center proof-mass (651), and at least one guiding arm (104a),
wherein the at least one first proof-mass, the at least one second proof-mass, the at least one center proof-mass, and the at least one guiding arm are disposed in a plane parallel to the substrate,
the at least one first proof mass is coupled to the at least one guiding arm through at least one first spring (108a) and the at least one second proof-mass is coupled to the at least one guiding arm through at least one second spring (103c);
the at least one center proof-mass is coupled to the at least one first proof-mass through at least one third spring (652a) and the at least one center proof-mass is coupled to the at least one second proof-mass through at least one fourth spring (652b);
the at least one guiding arm is coupled to the substrate through at least one fifth spring (108a, 108b);
wherein the at least one guiding arm is configured to allow anti-phase motion of the at least one first proof-mass and the at least one second proof-mass in a first direction in the plane;
an actuator (109a, 109b, 109c, 109d) configured to cause the at least one first proof-mass and the at least one second proof-mass to vibrate anti-phase in the first direction, and to cause the at least one center proof mass and at least one guiding arm to rotate in the plane; and
at least one transducer (112a, 112b) for sensing motion of a portion of the guided mass system out of the plane in response to angular velocity about a first input axis that is in the plane,
the gyroscope further comprising at least a second transducer (660a, 660b),
wherein the second transducer senses motion of the at least one center proof mass out of the plane in response to angular velocity about an input axis that is parallel to the first direction,
wherein the second transducer comprises two electrodes (660a, 660b) disposed on the substrate on opposite sides along the first direction under the at least one center proof mass (651) and the two electrodes (660a, 660b) are capacitive transducers for detecting rotation of the at least one center proof-mass about a second axis that is perpendicular to the first direction in the plane parallel to the substrate,
**characterized in that** the at least one center proof-mass is coupled to the substrate by at least one anchor through at least one sixth spring, such that the at least one center proof-mass is configured to follow motion of the substrate due to connection through the at least one anchor and the at least one sixth spring.

2. The gyroscope of claim 1 further comprising:
a stress relief frame (404a, 404b),
wherein the at least one guiding arm is coupled to the stress relief frame via the at least one fifth spring,
wherein the stress relief frame is coupled to the substrate through an anchor (4060a, 406b),
wherein the stress relief frame does not vibrate substantially in response to the actuator.

3. The gyroscope of claim 1, wherein the at least one guiding arm, the at least one first proof-mass, and the at least one second proof-mass are able to rotate out of the plane about the first sense axis.

4. The gyroscope of claim 3, wherein the at least one sixth spring is compliant in the plane allowing rotation in the plane and compliant out of the plane allowing rotation around a second sense axis.

5. The gyroscope of claim 1, wherein the at least one center proof mass is connected to at least one seventh spring (731a, 731b), wherein the at least one seventh spring is connected to at least one rigid element (731d), wherein the at least one rigid element is connected to the sixth spring; wherein the at least one seventh spring is compliant about a first sense axis.

6. The gyroscope of claim 1, wherein the at least one transducer is configured to sense motion of the at least one first proof mass out of the plane in response to the angular velocity about the first input axis; the first input axis is in the plane and orthogonal to the first direction.

## Patentansprüche

1. Gyroskop, umfassend:
ein Substrat (101);
ein Geführte-Masse-System (200), wobei das Geführte-Masse-System mindestens eine erste Prüfmasse (102a), mindestens eine zweite Prüfmasse (102b), mindestens eine mittlere Prüfmasse (651) und mindestens einen Führungsarm (104a) umfasst,
wobei die mindestens eine erste Prüfmasse, die mindestens eine zweite Prüfmasse, die mindestens eine mittlere Prüfmasse und der mindestens eine Führungsarm in einer Ebene parallel zu dem Substrat angeordnet sind,
die mindestens eine erste Prüfmasse durch mindestens eine erste Feder (108a) an den mindestens einen Führungsarm gekoppelt ist und die mindestens eine zweite Prüfmasse durch mindestens eine zweite Feder (103c) an den mindestens einen Führungsarm gekoppelt ist;
die mindestens eine mittlere Prüfmasse durch mindestens eine dritte Feder (652a) an die mindestens eine erste Prüfmasse gekoppelt ist und die mindestens eine mittlere Prüfmasse durch mindestens eine vierte Feder (652b) an die mindestens eine zweite Prüfmasse gekoppelt ist;
der mindestens eine Führungsarm durch mindestens eine fünfte Feder (108a, 108b) an das Substrat gekoppelt ist;
wobei der mindestens eine Führungsarm konfiguriert ist zum Gestatten einer gegenphasigen Bewegung der mindestens einen ersten Prüfmasse und der mindestens einen zweiten Prüfmasse in einer ersten Richtung in der Ebene;
einen Aktuator (109a, 109b, 109c, 109d), konfiguriert, zu bewirken, dass die mindestens eine erste Prüfmasse und die mindestens eine zweite Prüfmasse gegenphasig in der ersten Richtung schwingen, um zu bewirken, dass sich die mindestens eine mittlere Prüfmasse und mindestens ein Führungsarm in der Ebene drehen; und
mindestens einen Wandler (112a, 112b) zum Erfassen einer Bewegung eines Teils des Geführte-Masse-Systems außerhalb der Ebene als Reaktion auf eine Winkelgeschwindigkeit um eine erste Eingangsachse, die in der Ebene verläuft,
wobei das Gyroskop weiter mindestens einen zweiten Wandler (660a, 660b) umfasst,
wobei der zweite Wandler eine Bewegung mindestens einer mittleren Prüfmasse aus der Ebene als Reaktion auf eine Winkelgeschwindigkeit um eine Eingangsachse, die parallel zu der ersten Richtung verläuft, erfasst,
wobei der zweite Wandler zwei Elektroden (660a, 660b) umfasst, die auf dem Substrat auf gegenüberliegenden Seiten entlang der ersten Richtung unter der mindestens einen mittleren Prüfmasse (651) angeordnet sind und die beiden Elektroden (660a, 660b) kapazitive Wandler zum Detektieren einer Drehung der mindestens einen mittleren Prüfmasse um eine zweite Achse sind, die senkrecht zu der ersten Richtung in der Ebene parallel zu dem Substrat verläuft,
**dadurch gekennzeichnet, dass** die mindestens eine mittlere Prüfmasse durch mindestens einen Anker durch mindestens eine sechste Feder an das Substrat gekoppelt ist, so dass die wenigstens eine mittlere Prüfmasse konfiguriert ist zum Folgen einer Bewegung des Substrats aufgrund einer Verbindung durch den mindestens einen Anker und die mindestens eine sechste Feder.

2. Gyroskop nach Anspruch 1, weiter umfassend:
einen Spannungsabbaurahmen (404a, 404b),
wobei der mindestens eine Führungsarm über die mindestens eine fünfte Feder an dem Spannungsabbaurahmen gekoppelt ist,
wobei der Spannungsabbaurahmen durch einen Anker (4060a, 406b) an das Substrat gekoppelt ist,
wobei der Spannungsabbaurahmen als Reaktion auf den Aktuator nicht substantiell schwingt.

3. Gyroskop nach Anspruch 1, wobei der mindestens eine Führungsarm, die mindestens eine erste Prüfmasse und die mindestens eine zweite Prüfmasse sich aus der Ebene um die erste Erfassungsachse drehen können.

4. Gyroskop nach Anspruch 3, wobei die mindestens eine sechste Feder in der Ebene nachgiebig ist unter Gestatten einer Drehung in der Ebene und nachgiebig außer der Ebene gestattend eine Drehung um eine zweite Erfassungsachse.

5. Gyroskop nach Anspruch 1, wobei die mindestens eine mittlere Prüfmasse mit mindestens einer siebten Feder (731a, 731b) verbunden ist, wobei die mindestens eine siebte Feder mit mindestens einem starren Element (731d) verbunden ist, wobei das mindestens eine starre Element mit der sechsten Feder verbunden ist; wobei die mindestens eine siebte Feder um eine erste Erfassungsachse nachgiebig ist.

6. Gyroskop nach Anspruch 1, wobei
der mindestens eine Wandler konfiguriert ist zum Erfassen einer Bewegung der mindestens einen ersten Prüfmasse außerhalb der Ebene als Reaktion auf die Winkelgeschwindigkeit um die erste Eingangsachse, wobei die erste Eingangsachse in der Ebene und orthogonal zu der ersten Richtung verläuft.

## Revendications

1. Gyroscope comprenant :
un substrat (101) ;
un système de masse guidée (200), le système de masse guidée comprenant au moins une première masse étalon (102a), au moins une deuxième masse étalon (102b), au moins une masse étalon centrale (651), et au moins un bras de guidage (104a),
dans lequel l'au moins une première masse étalon, l'au moins une deuxième masse étalon, l'au moins une masse étalon centrale et l'au moins un bras de guidage sont disposés dans un plan parallèle au substrat,
l'au moins une première masse étalon est couplée à l'au moins un bras de guidage par le biais d'au moins un premier ressort (108a) et l'au moins une deuxième masse étalon est couplée à l'au moins un bras de guidage par le biais d'au moins un deuxième ressort (103c) ;
l'au moins une masse étalon centrale est couplée à l'au moins une première masse étalon par le biais d'au moins un troisième ressort (652a) et l'au moins une masse étalon centrale est couplée à l'au moins une deuxième masse étalon par le biais d'au moins un quatrième ressort (652b) ;
l'au moins un bras de guidage est couplé au substrat par le biais d'au moins un cinquième ressort (108a, 108b) ;
dans lequel l'au moins un bras de guidage est configuré pour permettre un mouvement en anti-phase de l'au moins une première masse étalon et de l'au moins une deuxième masse étalon dans un premier sens dans le plan ;
un actionneur (109a, 109b, 109c, 109d) configuré pour amener l'au moins une première masse étalon et l'au moins une deuxième masse étalon à vibrer en anti-phase dans le premier sens, et amener les au moins une masse étalon centrale et au moins un bras de guidage à tourner dans le plan ; et
au moins un transducteur (112a, 112b) pour détecter un mouvement d'une partie du système de masse guidée hors du plan en réponse à une vitesse angulaire autour d'un premier axe d'entrée qui se trouve dans le plan,
le gyroscope comprenant en outre au moins un deuxième transducteur (660a, 660b),
dans lequel le deuxième transducteur détecte un mouvement de l'au moins une masse étalon centrale hors du plan en réponse à une vitesse angulaire autour d'un axe d'entrée qui est parallèle au premier sens,
dans lequel le deuxième transducteur comprend deux électrodes (660a, 660b) disposées sur le substrat sur des côtés opposés le long du premier sens en-dessous de l'au moins une masse étalon centrale (651) et les deux électrodes (660a, 660b) sont des transducteurs capacitifs pour détecter une rotation de l'au moins une masse étalon centrale autour d'un second axe qui est perpendiculaire au premier sens dans le plan parallèle au substrat,
**caractérisé en ce que** l'au moins une masse étalon centrale est couplée au substrat par au moins un point d'ancrage par le biais d'au moins un sixième ressort, de telle sorte que l'au moins une masse étalon centrale soit configurée pour suivre le mouvement du substrat en raison de la connexion par le biais de l'au moins un point d'ancrage et de l'au moins un sixième ressort.

2. Gyroscope selon la revendication 1 comprenant en outre :
un cadre de détente de contraintes (404a, 404b),
dans lequel l'au moins un bras de guidage est couplé au cadre de détente de contraintes par l'intermédiaire de l'au moins un cinquième ressort,
dans lequel le cadre de détente de contraintes est couplé au substrat par le biais d'un point d'ancrage (4060a, 406b),
dans lequel le cadre de détente de contraintes ne vibre sensiblement pas en réponse à l'actionneur.

3. Gyroscope selon la revendication 1, dans lequel l'au moins un bras de guidage, l'au moins une première masse étalon et l'au moins une deuxième masse étalon peuvent tourner hors du plan autour du premier axe de détection.

4. Gyroscope selon la revendication 3, dans lequel l'au moins un sixième ressort est flexible dans le plan permettant la rotation dans le plan et flexible hors du plan permettant une rotation autour d'un second axe de détection.

5. Gyroscope selon la revendication 1, dans lequel l'au moins une masse étalon centrale est connectée à au moins un septième ressort (731a, 731b), l'au moins un septième ressort étant connecté à au moins un élément rigide (731d), l'au moins un élément rigide étant connecté au sixième ressort ; l'au moins un septième ressort étant flexible autour d'un premier sens de détection.

6. Gyroscope selon la revendication 1, dans lequel
l'au moins un transducteur est configuré pour détecter un mouvement de l'au moins une première masse étalon hors du plan en réponse à la vitesse angulaire autour du premier axe d'entrée ; le premier axe d'entrée se trouvant dans le plan et orthogonal au premier sens.
